# EUROPEAN PATENT SPECIFICATION

(11) **EP 1 583 295 B1**
(45) Date of publication and mention of the grant of the patent: **20.11.2013**
(21) Application number: 05003162.4
(22) Date of filing: 15.02.2005
(51) Int. Cl.: H04W 72/12, H04W 88/06

(54) **WLAN/WPAN coexistence with dynamic prioritization in wireless devices**
WLAN/WPAN-Koexistenz mit dynamischer Priorisierung in Mobilfunkendgeräten
Coexistence de WLAN/WPAN avec une prioritisation dynamique dans des dispositifs sans fil

(30) Priority: 26.03.2004 US 810998
(43) Date of publication of application: 05.10.2005
(73) Proprietor: Broadcom Corporation, Irvine, CA 92617 (US)
(72) Inventor: Su, Ling, Cupertino, CA 95014 (US); Ibrahim, Brima B., Aliso Viejo, CA 92656 (US)
(74) Representative: Jehle, Volker Armin

(56) References cited:
- EP-A2- 1 389 855
- US-A1- 2001 010 689
- US-A1- 2002 136 184
- US-A1- 2002 136 233
- US-A1- 2003 125 019

## Description

### BACKGROUND OF THE INVENTION

### 1. Field of the Invention

The present invention is directed in general to wireless communication systems. In one aspect, the present invention relates to a method and system for providing cooperative data transmission between two or more wireless communication devices.

### 2. Related Art

Communication systems are known to support wireless and wire-lined communications between wireless and/or wire-lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth (BT), advanced mobile phone services (AMPS), digital AMPS, global system for mobile communications (GSM), code division multiple access (CDMA), local multi-point distribution systems (LMDS), multi-channel-multi-point distribution systems (MMDS) and/or variations thereof.

Depending on the type of wireless communication system, a wireless communication device (such as a cellular telephone, two-way radio, personal digital assistant (PDA), personal computer (PC), laptop computer, home entertainment equipment, etc.) communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over the tuned channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switched telephone network, via the Internet, and/or via some other wide area network.

Wireless communication devices typically communicate with one another using a radio transceiver (i.e., receiver and transmitter) that may be incorporated in, or coupled to, the wireless communication device. The transmitter typically includes a data modulation stage, one or more frequency conversion stages and a power amplifier. The data modulation stage converts raw data into baseband signals in accordance with a particular wireless communication standard. The frequency conversion stages mix the baseband signals with one or more local oscillations to produce RF signals. The power amplifier amplifies the RF signals prior to transmission via an antenna. In direct conversion transmitters/receivers, conversion directly between baseband signals and RF signals is performed. The receiver is typically coupled to an antenna and includes a low noise amplifier, one or more frequency conversion stages, a filtering stage and a data recovery stage. The low noise amplifier receives inbound RF signals via the antenna and amplifies them. The frequency conversion stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As the use of wireless communication devices increases, many wireless communication devices will include two or more radio transceivers, where each radio transceiver is compliant with any of a variety of wireless communication standards may be used with the exemplary communication systems described herein, including Bluetooth, IEEE 802.11(a), (b), (g) and others. For instance, a computer may include two radio transceivers, one for interfacing with a peripheral device (such as a keyboard or mouse) and another for interfacing with a wireless local area network (WLAN) interfacing. Even though the two radio transceivers are compliant with different wireless communication standards, they may occupy the same or similar frequency spectrum, and thus will interfere with each other's ability to receive inbound packets. For example, if one radio transceiver is compliant with Bluetooth and the other is compliant with IEEE 802.11 (b) or IEEE 802.11 (g), both radio transceivers would operate in the 2.4 GHz frequency range. In this example, if the Bluetooth radio transceiver is receiving a packet and the IEEE 802.11 radio transceiver begins transmitting a packet, the transmission may interfere with the Bluetooth radio transceiver's ability to accurately receive the packet. Similarly, if the IEEE 802.11 radio transceiver is receiving a packet and the Bluetooth radio transceiver begins transmitting a packet, the transmission by the Bluetooth radio may interfere with the IEEE 802.11 radio transceiver's ability to accurately receive the packet. In addition, concurrent transmission by both the IEEE 802.11 radio transceiver and the Bluetooth radio transceiver may cause interference, thus corrupting one or both transmissions.

Prior attempts to address this problem have implemented frequency domain collaboration techniques, such as adaptive frequency hopping (AHF), which is a driver level coordination of the device performance. One drawback associated with AHF is an interoperability requirement whereby all of the Bluetooth devices must be able to understand the AHF technique. Another difficulty is that it can be difficult to determine when to enable the AFH technique. There can also be a spectrum efficiency problem when, through MAC layer assistance, a current 802.11 channel is given to a Bluetooth device and the AFH explicitly skips the overlapped channel which could actually be reused if the WLAN device is not transmitting. In short, AHF does not, by itself, protect sufficiently against interference from concurrent transmission or reception. Another attempted solution is a time domain collaboration technique (also referred to as collaborative coexistence) which is a MAC level coexistence protocol between Bluetooth and 802.11 devices using a simple prioritization MAC layer coexistence protocol, whereby two or four pins are used to couple the MAC modules.

The initial versions of the Broadcom BCM4306 and BCM94306 products also implemented a simple two wire coexistence protocol using two levels of priority. While standard two wire coexistence techniques allow priority to be reserved for a specified wireless device (BT or WLAN), such techniques are not well optimized for real-time operations.

In addition to the complexity of the computational requirements for a communications transceiver, such as described above, the ever-increasing need for higher speed communications systems imposes additional performance requirements and resulting costs for communications systems. In order to reduce costs, communications systems are increasingly implemented using Very Large Scale Integration (VLSI) techniques. The level of integration of communications systems is constantly increasing to take advantage of advances in integrated circuit manufacturing technology and the resulting cost reductions. This means that communications systems of higher and higher complexity are being implemented in a smaller and smaller number of integrated circuits. For reasons of cost and density of integration, the preferred technology is CMOS. To this end, digital signal processing ("DSP") techniques generally allow higher levels of complexity and easier scaling to finer geometry technologies than analog techniques, as well as superior testability and manufacturability.

Therefore, a need exists for a method and apparatus that provides cooperation between two or more common band wireless communication devices to substantially eliminate interference caused by concurrent operations. In addition, a need exists for a method and apparatus that prioritizes competing data transmissions between wireless communication devices, such as Bluetooth and 802.11 devices. Moreover, a need exists for a method and apparatus that coordinates competing wireless data transmissions so that real time operations are not impaired. There is also a need for a better system that is capable of performing the above functions and overcoming these difficulties using circuitry implemented in integrated circuit form. Further limitations and disadvantages of conventional systems will become apparent to one of skill in the art after reviewing the remainder of the present application with reference to the drawings and detailed description which follow.

CHEN MINGHUA el al (US 2002/0136233) provide a system and method for coordinating transmissions in a wireless network wherein a plurality of frequency-overlapping protocols are used to exchange information between devices. In this system, a coordination point device integrates a monitoring functionality to identify impending data collisions between the frequency-overlapping protocols. The coordination point device further identifies quality of service parameters to determine if the protocols are operating within desirable ranges. Moderation of one or more of the protocols is then performed to avoid data collisions arising from overlapping transmissions between the protocols while maintaining data throughput within acceptable ranges.

KARDACH et al (EP 1389855) provide a method and apparatus for mitigating radio frequency interference between transceiver systems within an electronic device.

According to the invention, there is provided a method for coordinating potentially conflicting wireless communications in an integrated circuit wireless communication device having at least two wireless transceiver circuits as defined by independent claim 1, and an integrated circuit wireless communication device adapted to coordinate potentially conflicting wireless communications as defined by independent claim 3. Further advantageous features of the invention are defined by the dependent claims.

The present invention relates to a method and an integrated circuit wireless communication device according to claims 1 and 3.

The present Invention provides reducing interference between competing wireless communication devices. Using a multi-priority coexistence protocol at the MAC layer, throughput on the devices may be fine tuned and dynamically updated to reduce or eliminate interference between wireless communication devices without affecting the latency and throughput requirements for either Bluetooth or 802.11-based applications. This may be accomplished using multiple, programmable priority levels for improving MAC level coordination which are dynamically assigned based on the throughput requirements for the devices that may be defined with reference to the active applications and/or user-specified performance requirements. For example, a multi-priority coexistence protocol is provided for dynamically protecting real-time human interface device (HID) traffic (such as Bluetooth-based mouse, keyboard, etc.) from 802.11 interference.

In accordance with an aspect, a method and apparatus provide for coordination of potentially conflicting wireless communications with a communication device by using multiple, dynamically updateable priority levels that are adjusted based on the detection of predetermined applications that are transmitting or receiving on the device. In a selected embodiment, the communication device includes wireless transceiver circuits, each of which has an assigned priority indication. Data receive/transmit operations on the transceiver circuits arc ordered or coordinated by MAC layer modules in each circuit in accordance with the relative priorities of the priority indications. In a selected embodiment, the MAC layer modules are directly coupled by a priority control interface. For example, a first transceiver circuit with a higher priority is provided greater access to the receive/transmit operations than a second transceiver circuit with a lower priority. However, if a predetermined application (such as a HID driver, an audio-video application, or some other real-time data signal) is detected as transmitting or receiving on the second transceiver circuit, its priority is increased or incremented or maximized to a third priority indication and data is received or transmitted on the second transceiver circuit in accordance with the relative priority of the third priority indication to the first priority indication. With this technique, communication device may coordinate a first wireless interface device (i.e., a WLAN or 802.11 device) with a second wireless interface (i.e., a Bluetooth device) to dynamically adjust the transmit/receive priority to the second wireless interface if a predetermined application is detected or if a user-specified priority is assigned to the second wireless interface.

According to an aspect, in an integrated circuit wireless communication device having at least two wireless transceiver circuits, a method for coordinating potentially conflicting wireless communications is provided, comprising:
assigning first and second priority indications to first and second wireless transceiver circuits, respectively, where each priority indication may be selected from a plurality of available priority indications;
receiving or transmitting data on the first wireless transceiver circuit in accordance with the relative priority of the first priority indication to the second priority indication;
detecting a predetermined application that configured to receive or transmit data on the second wireless transceiver circuit;
assigning a third priority indication to the second wireless transceiver circuit when the predetermined application is detected; and
receiving or transmitting data on the second wireless transceiver circuit in accordance with the relative priority of the third priority indication to the first priority indication.
Advantageously, the first wireless transceiver circuit comprises a MAC layer module that is directly coupled to a MAC layer module of the second wireless transceiver circuit such that a priority indication may be transferred between the MAC layer modules.
Advantageously, the third priority indication is a maximum priority indication that is available from the plurality of available priority indications.
Advantageously, the third priority indication is greater than the second priority indication.
Advantageously, the second wireless transceiver circuit comprises a Bluetooth application, and the predetermined application comprises a Human Interface Device driver.
Advantageously, the receiving or transmitting data on the second wireless transceiver circuit in accordance with the relative priority of the third priority indication to the first priority indication comprises receiving or transmitting data on the second wireless transceiver circuit if the third priority indication has a higher priority than the first priority indication.
Advantageously, the first priority indication comprises a user-specified priority indication for the first wireless transceiver circuit, such that the first wireless transceiver circuit is given priority in the reception or transmission of data relative to the second wireless transceiver circuit.
Advantageously, the first wireless transceiver circuit comprises a WLAN wireless interface device, and wherein the second wireless transceiver circuit comprises a Bluetooth wireless interface device.
Advantageously, the first wireless transceiver circuit comprises a first Bluetooth wireless interface device, and wherein the second wireless transceiver circuit comprises a second Bluetooth wireless interface device.
Advantageously, the first wireless transceiver circuit is compliant with Bluetooth and the second wireless transceiver circuit is compliant with IEEE 802.11 (b) or IEEE 802.11 (g).
According to an aspect, an apparatus for coordinating wireless communications is provided, comprising:
a first wireless interface circuit for performing receiving or transmitting operations of a first type of wireless communication having a first priority level selected from a first plurality of priority levels;
a second wireless interface circuit for performing receiving or transmitting operations of a second type of wireless communication having a second priority level selected from a second plurality of priority levels;
an interface coupling the first and second wireless interface circuits for transmitting priority levels between the first and second wireless interface circuits; and
a controller for coordinating the operations of the first or second wireless interface circuits in relation to a relative priority of the first and second priority levels, said controller comprising priority level adjustment logic for adjusting a priority level in response to detecting a predetermined condition.
Advantageously, the first wireless transceiver circuit is compliant with Bluetooth and the second wireless transceiver circuit is compliant with IEEE 802.11.
Advantageously, the controller comprises a MAC layer module.
Advantageously, the controller comprises a first MAC layer module in the first wireless interface circuit and a second MAC layer module in the second wireless interface circuit.
Advantageously, the predetermined condition comprises a request to receive or transmit real time data over the second wireless interface circuit.
Advantageously, the predetermined condition comprises real-time human interface device (HID) traffic being transmitted or received on the second wireless interface circuit, and wherein the priority level adjustment logic increments the second priority level.
Advantageously, the predetermined condition comprises a user-specified priority level being entered for the second wireless interface circuit, and wherein the priority level adjustment logic increments the second priority level above the first priority level in response to detecting the user-specified priority level.
Advantageously, the predetermined condition comprises audio-video traffic being transmitted or received on the second wireless interface circuit, such that the controller protects the second wireless interface circuit from interference caused by the first wireless interface circuit by adjusting the second priority level to a maximum level and adjusting the first priority level to a minimum level.
According to an aspect, an apparatus for implementing a dynamic collaboration protocol is provided, comprising:
first means for sending or receiving a first wireless signal having a first allocated priority, comprising a first MAC layer module;
second means for sending or receiving a second wireless signal having a second allocated priority, comprising a second MAC layer module;
means for adjusting the second allocated priority to be higher than the first allocated priority if real-time human interface device (HID) traffic is detected on the second means; and
means for interfacing the first and second MAC layer modules to coordinate throughput performance of the first and second means such that whichever of the first or second means has a higher allocated priority is given higher throughput performance.
Advantageously, the second wireless signal comprises a packet signal, and wherein the means for adjusting the second allocated priority evaluates each packet of the packet signal to detect if real-time human interface device (HID) traffic is present on the second means.

The objects, advantages and other novel features of the present invention will be apparent from the following detailed description when read in conjunction with the appended claims and attached drawings.

### BRIEF DESCRIPTION OF THE DRAWINGS

Figure 1 is a schematic block diagram of a wireless communication system in accordance with the present invention.

Figure 2 is a schematic block diagram of a wireless communication device in accordance with the present invention.

Figure 3 is a schematic block diagram of a wireless interface device in accordance with the present invention.

Figure 4 is a schematic block diagram of a selected embodiment of an antenna section in accordance with the present invention.

Figure 5 is a graphical representation of the dynamically programmable throughput options provided by having multiple priority levels in accordance with the present invention.

Figure 6 is a logic diagram of a method for cooperative transceiving between wireless interface devices in accordance with the present invention.

Figure 7 is a diagram illustrating cooperative transceiving between wireless interface devices of a host device in accordance with the present invention.

### DETAILED DESCRIPTION

A method and apparatus for an improved wireless communication system is described. While various details are set forth in the following description, it will be appreciated that the present invention may be practiced without these specific details. For example, selected aspects are shown in block diagram form, rather than in detail, in order to avoid obscuring the present invention. Some portions of the detailed descriptions provided herein are presented in terms of algorithms or operations on data within a computer memory. Such descriptions and representations are used by those skilled in the field of communication systems to describe and convey the substance of their work to others skilled in the art. In general, an algorithm refers to a self-consistent sequence of steps leading to a desired result, where a "step" refers to a manipulation of physical quantities which may, though need not necessarily, take the form of electrical or magnetic signals capable of being stored, transferred, combined, compared, and otherwise manipulated. It is common usage to refer to these signals as bits, values, elements, symbols, characters, terms, numbers, or the like. These and similar terms may be associated with the appropriate physical quantities and are merely convenient labels applied to these quantities. Unless specifically stated otherwise as apparent from the following discussion, it is appreciated that throughout the description, discussions using terms such as processing, computing, calculating, determining, displaying or the like, refer to the action and processes of a computer system, or similar electronic computing device, that manipulates and/or transforms data represented as physical, electronic and/or magnetic quantities within the computer system's registers and memories into other data similarly represented as physical quantities within the computer system memories or registers or other such information storage, transmission or display devices.

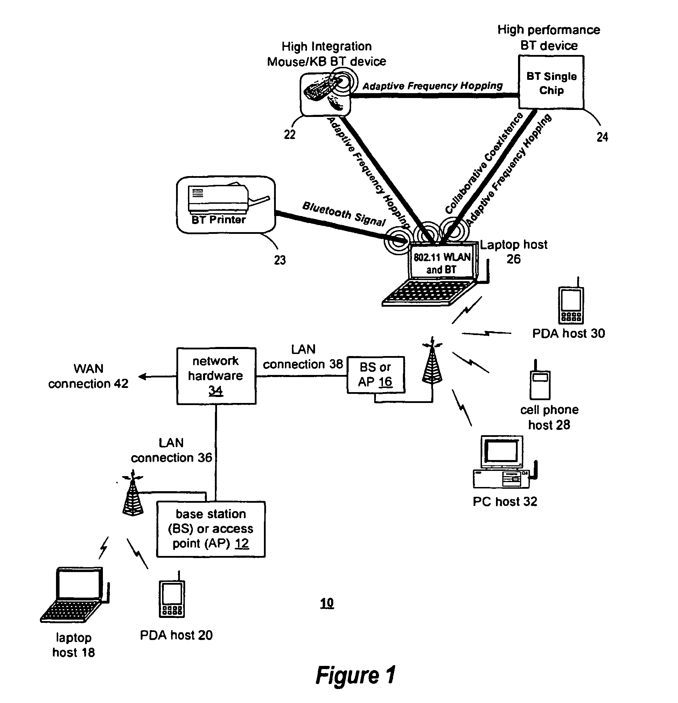

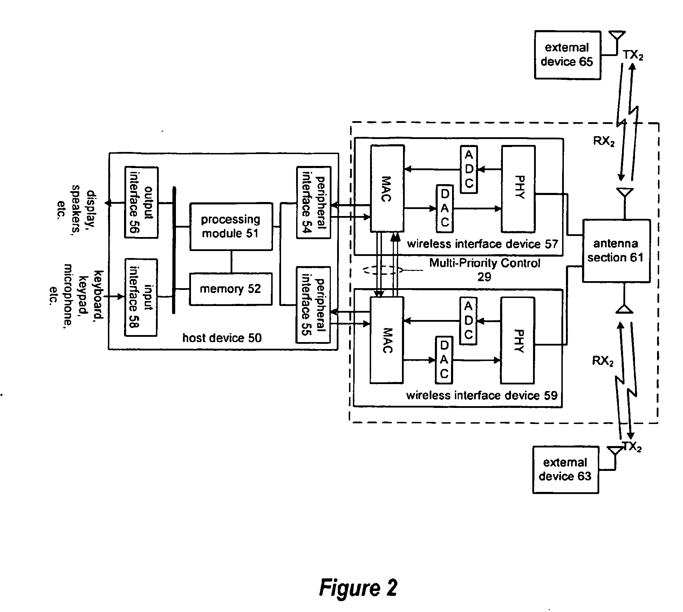

Figure 1 illustrates a wireless communication system 10 in which embodiments of the present invention may operate. As illustrated, the wireless communication system 10 includes a plurality of base stations and/or access points 12, 16, a plurality of wireless communication devices 18-32 and a network hardware component 34. The wireless communication devices 18-32 may be laptop host computers 18 and 26, personal digital assistant hosts 20 and 30, personal computer hosts 32, cellular telephone hosts 28 and/or wireless keyboards, mouse devices or other Bluetooth devices 22, 24. The details of the wireless communication devices will be described in greater detail with reference to Figures 2-7.

As illustrated, the base stations or access points 12, 16 are operably coupled to the network hardware 34 via local area network connections 36, 38. The network hardware 34 (which may be a router, switch, bridge, modem, system controller, etc.) provides a wide area network connection 42 for the communication system 10. Each of the base stations or access points 12, 16 has an associated antenna or antenna array to communicate with the wireless communication devices in its area. Typically, the wireless communication devices register with a particular base station or access point 12, 16 to receive services from the communication system 10. For direct connections (i.e., point-to-point communications), wireless communication devices communicate directly via an allocated channel. Regardless of the particular type of communication system, each wireless communication device includes a built-in radio and/or is coupled to a radio. The radio includes a highly linear amplifier and/or programmable multi-stage amplifier as disclosed herein to enhance performance, reduce costs, reduce size, and/or enhance broadband applications.

Figure 2 is a schematic block diagram illustrating a radio implemented in a wireless communication device that includes the host device or module 50 and at least one wireless interface device, or radio transceivers, 57, 59. The wireless interface devices may be built in components of the host device 50 or externally coupled components. As illustrated, the host device 50 includes a processing module 51, memory 52, peripheral interface(s) 54, 55, input interface 58 and output interface 56. The processing module 51 and memory 52 execute the corresponding instructions that are typically done by the host device. For example, in a cellular telephone device, the processing module 51 performs the corresponding communication functions in accordance with a particular cellular telephone standard.

For data received from the wireless interface device 59 (e.g., inbound data), the peripheral interface 55 provides the data to the processing module 51 for further processing and/or routing to the output interface 56. The output interface 56 provides connectivity to an output display device such as a display, monitor, speakers, etc., such that the received data may be displayed. The peripheral interface 55 also provides data from the processing module 51 to the wireless interface device 59. The processing module 51 may receive the outbound data from an input device such as a keyboard, keypad, microphone, etc. via the input interface 58 or generate the data itself. For data received via the input interface 58, the processing module 51 may perform a corresponding host function on the data and/or route it to a wireless interface device 59 via the peripheral interface 55.

The radio or wireless interface devices 57, 59 include a media-specific access control protocol (MAC) layer module, a digital-to-analog converter (DAC), an analog to digital converter (ADC) and a physical layer module (PHY) (which may include the DAC and ADC units). As will be appreciated, the modules in the wireless interface device are implemented with a communications processor and an associated memory for storing and executing instructions that control the access to the physical transmission medium in the wireless network. The peripheral interfaces 54, 55 allow data to be received from and sent to one or more external devices 63, 65 via the wireless interface devices 57, 59. Each external device includes its own wireless interface device for communicating with the wireless interface device of the host device. For example, the host device may be personal or laptop computer and the external device 65 may be a headset, personal digital assistant, cellular telephone, printer, fax machine, joystick, keyboard, desktop telephone, or access point of a wireless local area network. In this example, external device 65 is an IEEE 802.11 wireless interface device and external device 63 is a Bluetooth wireless interface device.

In operation, to avoid interference between the two or more wireless interface devices 57 and 59 of the wireless communication device, the MAC layer modules of each wireless interface device 57 and 59 communicate directly with one another to exchange multi-priority control signal information 29 to avoid concurrent transmission and/or reception of wireless transmissions with the corresponding external device if such concurrent transmission or reception would cause interference. As illustrated, the multi-priority control signals are exchanged using two or more pins or wires, though as will be appreciated, more or fewer connections may be used to exchange or transmit the control information if appropriate signaling techniques are used. The methods by which the MAC layer modules detect, adjust and/or set the control information may be executed by the processing module(s) and other transceiver module(s) included in the wireless interface devices 57, 59, or may alternatively be executed by the processing functionality in the host device 50.

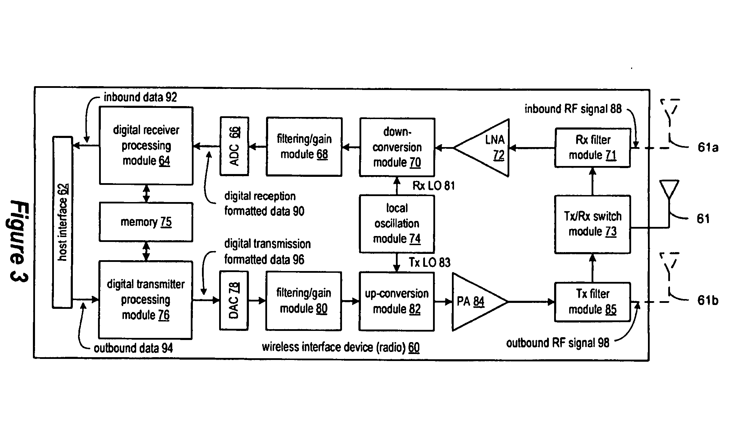

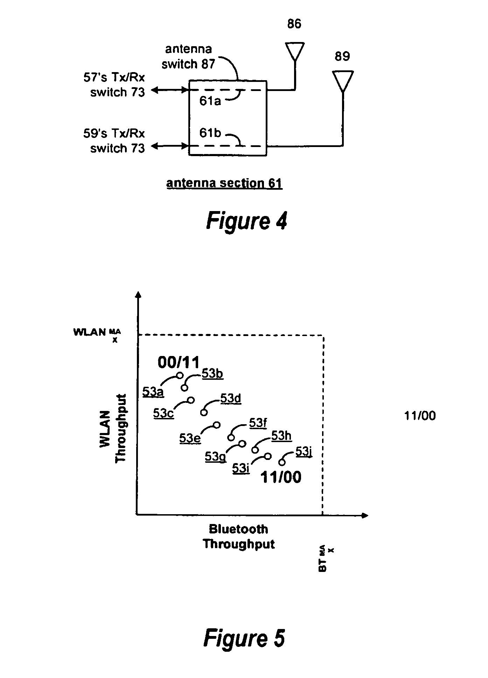

Figure 3 is a schematic block diagram of the signal processing modules included in a wireless interface device (i.e., a radio) 60 which includes a host interface 62, digital receiver processing module 64, an analog-to-digital converter (ADC) 66, a filtering/attenuation module 68, a down-conversion stage 70, a receiver filter 71, a low noise amplifier 72, a transmitter/receiver switch 73, a local oscillation module 74, memory 75, a digital transmitter processing module 76, a digital-to-analog converter (DAC) 78, a filtering/gain module 80, a mixing up-conversion stage 82, a power amplifier 84, and a transmitter filter module 85. The transmitter/receiver switch 73 is coupled to the antenna 61, which may include two antennas 86, 89 and an antenna switch 87 (as shown in Figure 4) that is shared by the two wireless interface devices and is further shared by the transmit and receive paths as regulated by the transmit/receive switch 73. Alternatively, the antenna section 61 may include separate antennas for each wireless interface device (as shown by direct connection lines 61a, 61b), where the transmit path and receive path of each wireless interface device shares the antenna. As one of ordinary skill in the art will appreciate, the antenna(s) may be polarized, directional, and/or physically separated to provide a minimal amount of interference.

Referring again to Figure 3, the digital receiver processing module 64, the digital transmitter processing module 76 and the memory 75 may be included in the MAC module and execute digital receiver functions and digital transmitter functions in accordance with a particular wireless communication standard. The digital receiver functions include, but are not limited to, digital frequency conversion, demodulation, constellation demapping, decoding and/or descrambling. The digital transmitter functions include, but are not limited to, scrambling, encoding, constellation mapping, modulation and/or digital baseband frequency conversion. The digital receiver and transmitter processing modules 64, 76 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry and/or any device that manipulates signals (analog and/or digital) based on operational instructions. The memory 75 may be a single memory device or a plurality of memory devices. Such a memory device may be a read-only memory, random access memory, volatile memory, non-volatile memory, static memory, dynamic memory, flash memory and/or any device that stores digital information. Note that when the processing module 64, 76 implements one or more of its functions via a state machine, analog circuitry, digital circuitry and/or logic circuitry, the memory storing the corresponding operational instructions may be embedded with the circuitry comprising the state machine, analog circuitry, digital circuitry and/or logic circuitry.

When transmitting data, the wireless interface device 60 receives outbound data 94 from the host device via the host interface 62. The host interface 62 routes the outbound data 94 to the digital transmitter processing module 76, which processes the outbound data 94 to produce digital transmission formatted data 96 in accordance with a particular wireless communication standard, such as IEEE 802.11 (including all current and future subsections), Bluetooth, etc. The digital transmission formatted data 96 will be a digital base-band signal or a digital low IF signal, where the low IF typically will be in the frequency range of one hundred kilohertz to a few megahertz. Subsequent stages convert the digital transmission formatted data to an RF signal, and may be implemented as follows. The digital-to-analog converter 78 converts the digital transmission formatted data 96 from the digital domain to the analog domain. The filtering/gain module 80 filters and/or adjusts the gain of the analog signal prior to providing it to the mixing stage 82. The mixing stage 82 directly converts the analog baseband or low IF signal into an RF signal based on a transmitter local oscillation clock 83 provided by local oscillation module 74. Alternatively, the digital baseband signal 96 may be directly converted to an RF signal. The power amplifier 84 amplifies the RF signal to produce outbound RF signal 98, which is filtered by the transmitter filter module 85. The antenna section 61 transmits the outbound RF signal 98 to a targeted device such as a base station, an access point and/or another wireless communication device.

When receiving data, the wireless interface device 60 receives an inbound RF signal 88 via the antenna section 61, which was transmitted by a base station, an access point, or another wireless communication device. The inbound RF signal is converted into digital reception formatted data; this conversion may be implemented as follows. The antenna section 61 provides the inbound RF signal 88 to the receiver filter module 71 directly or via the transmit/receive switch 73, where the receiver filter 71 bandpass filters the inbound RF signal 88. The receiver filter 71 provides the filtered RF signal to low noise amplifier 72, which amplifies the signal 88 to produce an amplified inbound RF signal. The low noise amplifier 72 provides the amplified inbound RF signal to the mixing module 70, which directly converts the amplified inbound RF signal into an inbound low IF signal or baseband signal based on a receiver local oscillation clock 81 provided by local oscillation module 74. The down conversion module 70 provides the inbound low IF signal or baseband signal to the filtering/gain module 68. The filtering/gain module 68 filters and/or gains the inbound low IF signal or the inbound baseband signal to produce a filtered inbound signal. The analog-to-digital converter 66 converts the filtered inbound signal from the analog domain to the digital domain to produce digital reception formatted data 90. Alternatively, the received RF signal may be directly converted to a baseband signal 90. The digital receiver processing module 64 decodes, descrambles, demaps, and/or demodulates the digital reception formatted data 90 to recapture inbound data 92 in accordance with the particular wireless communication standard being implemented by wireless interface device. The host interface 62 provides the recaptured inbound data 92 to the host device (e.g., 50) via the peripheral interface (e.g., 55).

As will be appreciated, the wireless communication device of Figure 2 described herein may be implemented using one or more integrated circuits. For example, the host device 50 may be implemented on one integrated circuit, the digital receiver processing module 64, the digital transmitter processing module 76 and memory 75 may be implemented on a second integrated circuit, and the remaining components of the radio 60 and/or antenna 61, may be implemented on a third integrated circuit. As an alternate example, the radio 60 may be implemented on a single integrated circuit. As yet another example, the processing module 51 of the host device and the digital receiver and transmitter processing modules 64 and 76 may be a common processing device implemented on a single integrated circuit. Further, the memory 52 and memory 75 may be implemented on a single integrated circuit and/or on the same integrated circuit as the common processing modules of processing module 51 and the digital receiver and transmitter processing module 64 and 76. In a selected embodiment, the present invention shows, for the first time, a fully integrated, single chip coexistence solution for competing wireless signals (such as 802.11 a/b/g and Bluetooth signals) with multiple priority levels where the allocation of priority may be dynamically updated in response to user input, detected application requirements, and other inputs, in order to meet or maintain communications requirements for a given wireless interface device in the face of potentially conflicting transmissions, all implemented in CMOS (Complementary Metal Oxide Semiconductor), as part of a single chip transceiver radio.

The present invention enables wireless communication devices (such as a Bluetooth device and a WLAN device) to communicate with one another by controlling the transceiving events to reduce or eliminate conflicts using dynamic, multiple priority levels that permit improved MAC coordination of the device operations. Figure 5 graphically depicts the various control signal permutations (e.g., 53a-53j) that are available for selection by using multiple, dynamically selectable priority levels. In accordance with the present invention, an initially selected control signal (e.g., 53b) is used to allocate receiving and/or transmission priorities as between two wireless devices (e.g., a WLAN device 65 and a Bluetooth device 63), but the control signal may be adjusted to another control signal (e.g., 53h) when higher throughput is required for the Bluetooth device 63. A control signal change can be precipitated by a explicit user choice, upon detection of an active application (or its throughput requirements) that is attempting to transmit or receive data through a wireless interface device, by specific commands received in connection with a particular wireless protocol, or any other data transmission condition that allows or requires a different prioritization or transmission performance. As will be appreciated, the control signal may be dynamically adjusted in a variety of ways, including making adjustments periodically, in response to user input, at predetermined events or conditions, on a packet-by-packet basis, or on any other basis that permits changes in the performance requirements of a particular wireless transmission to be detected and accommodated.

Whether implemented as a two wire interface or four wire interface (as illustrated with multi-priority control lines 29 in Figure 2), or any other type of interface, the present invention uses control signals on these interfaces, wires or pins to exchange multiple levels of prioritization information between the MAC layers in the wireless devices. For example, an interface may be used to provide four levels of priority to each device, with the highest priority being "00" and the lowest priority being "11." By setting or programming the values for these priority levels (e.g., 00/11 53a), one of the devices (e.g., the WLAN device 65) is configured through the MAC layer for maximum throughput. On the other extreme, a different priority level signal (e.g., 11/00 53j) maximizes the throughput for the other device (e.g., the BT device 63). Thus, different combinations of the priority information can be used to provide greater granularity in the MAC controls, which can be used to maximize the performance of both links.

As shown in Figure 5, the multiple-priority protocol of the present invention allows more differentiation between traffic types than with simple priority-based protocols. As a result, not only throughput, but also response time (latency) can be guaranteed statistically. This capability makes it possible to co-locate a Bluetooth-based HID device with an 802.11 device on the same laptop computer, and to adjust the priority allocations between the devices when an application on one device requires greater throughput. Thus, the priority allocation enhancement provides for dynamic control of the priorities using programmable priority levels that can be used to protect real-time HID traffic (such as a Bluetooth-based mouse, keyboard, etc.) from WLAN interference (such as 802.11 signals).

In addition to providing multiple priority level combinations, the priority level for a given wireless interface device may be dynamically adjusted on a packet by packet basis, thereby permitting even greater control and improved performance. For example, through use of the dynamic multiple priority levels, the connection time for a first device (e.g., a Bluetooth device) can be reduced by assigning a high priority to the device. With one example of this approach, it is possible to reduce the latency between an HIDoff signal to a Bluetooth device and the beginning of character transmission latency to a second, WLAN device.

In a selected embodiment, a processing module (e.g., 64, 76) is used to generate and exchange priority information between MAC modules. Alternatively, the host device 50 may generate and allocate multi-level priority information using an algorithm or other processing techniques to define the priority level on a packet-by-packet basis. Wherever processed, the packet priority may be defined as a function of any data transmission condition that allows or requires a different prioritization or transmission performance, whether input by the user or detected or precipitated upon detection of an active application (or its throughput requirements) or specific commands received in connection with a particular wireless protocol, such as Synchronous Connection-Oriented (SCO) commands, Human Interface Device (HID) commands, or Link Manager Protocol (LMP) commands. Priority may also be defined as a function of Quality of Service (QoS), such as proximity in time to the poll interval (Tₚₒₗₗ), or as a function of the connection maintenance packet. In a selected embodiment, a priority allocation and/or adjustment algorithm may be selected by the host stack based on the applications being run on the wireless communication devices, on the profiles in use, on remote side capabilities and other wireless application-related information.

In a selected embodiment, one or more priority generating algorithms may be stored on the wireless interface device (e.g., 59, 57) in an electrically erasable programmable read only memory (EEPROM) and configurable via Over The Air Firmware Update (OTAFU), and the host application is used to control the algorithm selection. The algorithm or firmware can also be stored in on-chip RAM which can be loaded or configured by host driver software. With this approach, messaging schemes may be stored on, or processed by, the host device and used to control communication conflicts between wireless communication devices, such as WLAN and Bluetooth devices. For example, the present invention may be used to provide unique prioritization for each SCO link.

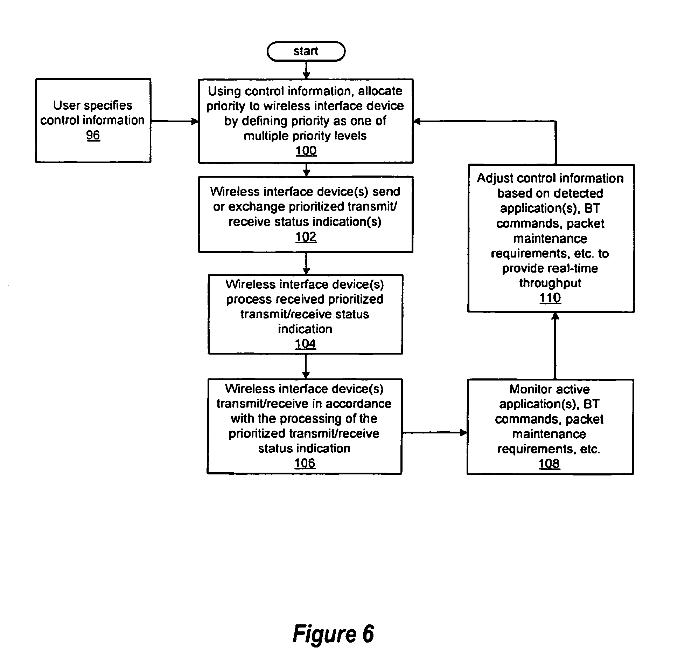

Turning now to Figure 6, a method for cooperative transceiving between wireless interface devices is illustrated. The method begins at step 100, where each wireless interface device uses control information (which has been specified at steps 96, 108 or 110 as described below) to allocate device priority to a wireless interface device by selecting from multiple, available priority levels. At step 102, at least one of the wireless interface devices provides a prioritized transmit/receive status indication to another wireless interface device, such as by using a priority control signal 29. For example, one of the wireless interface devices that transceives data packets in accordance with a Bluetooth standard transmits a relatively low prioritized status indication, while the other wireless interface devices transceive data packets in accordance with an IEEE 802.11 standard transmits a relatively high prioritized status indication.

At step 104, the prioritized status indication is processed to control and eliminate conflicts based on the devices' relative priorities, and at step 106, the wireless interface devices transmit or receive a packet in accordance with the processing of the prioritized status indication. For example, the processing (step 104) may determine when a first wireless interface device having a higher prioritized status indication is or will be receiving an inbound packet. This may be determined by a processing module in wireless interface device that compares its own priority level to the priority level transmitted by the other wireless interface device using the control signal interface 29. By comparing the local and sensed prioritized status indications, transmission and reception may be controlled to give preference or priority to the higher priority device. For example, at the start of an atomic sequence, a local device may compare priority levels by checking the prioritized status indications (or control information) from a peer device and determining whether the local device can perform its transaction based on the following rules:
(1) If the peer prioritized status indication is higher than the local prioritized status indication, then the atomic sequence for the local device is delayed to next time epoch.
(2) If the peer prioritized status indication is lower than the local prioritized status indication, then the atomic sequence for the local device is transmitted or received (as the case may be).
(3) If the peer prioritized status indication equals the local prioritized status indication, then the atomic sequence for the local device is transmitted using a transmission protocol (such as randomized transceiving operations) that allows the local and peer devices to share the transmission channel or that gives priority to the handling of the atomic sequence by the local device fifty percent of the time.

Of course, other prioritization processing schemes could be used. For example, one device could be given priority if its prioritized status indication is equal to or greater than the peer device's prioritized status indication, and could be given a lower priority if its prioritized status indication is less than the peer device's prioritized status indication.

If prioritized status indication processing indicates that a first wireless interface device having a higher prioritized status indication is or will be receiving an inbound packet, then at step 106, the other wireless interface device delays transmitting the outbound packet until the first wireless interface device has received the inbound packet. As will be appreciated, to minimize the time that one wireless interface device is receiving packets, and hence reduce the wait time, the packet size of inbound packets and outbound packets may be optimized in accordance with the particular wireless communication standard.

If the transmitting of the outbound packet would not interfere with the receiving of the inbound packet, then at step 106, the other wireless interface device transmits the outbound packet while the inbound packet is being received. For example, the processing of the status indication may indicate that the other wireless interface device is compliant with the Bluetooth standard and may adaptively adjust its frequency hopping sequence to reduce interference with the other wireless interface device, in which case there is no interference and both devices may operate concurrently.

In yet another example of the processing of the prioritized status indications for two wireless interface devices transmitting outbound packets, the lower priority first wireless interface device determines (at step 104) that the higher priority second wireless interface device is transmitting an outbound message. In this situation, the first wireless interface device (at step 106) delays transmitting of the outbound packet until the second wireless interface device has transmitted the outbound packet unless interference would be minimal, in which case both devices may transmit simultaneously. However, if the prioritized status indication for the first wireless interface device is increased above the second wireless interface device (such as described herein when it is detected that packet data for the first device is used for low latency, real time applications), then at step 106, the first device transmits while transmission on the second device is delayed.

As indicated in Figure 6, the control information that is used to allocate device priority may be user-specified (as indicated at step 96). For example, a user can enter control information to configure one of the wireless devices (e.g., a Bluetooth device that is transmitting audio or video data or some other real time application) to have high throughput than another device. As another example of step 96, a user may wish to expedite a data download operation over a WLAN device, in which case the user can specify that the wireless interface device for the WLAN device has a higher or even highest priority.

In addition or in the alternative, the prioritization allocations may be dynamically and automatically updated by monitoring the transmission activities or applications running on a wireless interface device (step 108), and then adjusting the control information based on the detected activity (step 110). For example, upon detecting (at step 108) that a predetermined application (such as a Human Interface Devices (HID) application) is transmitting to or from a first wireless interface device (such as a Bluetooth device), the control information is adjusted (at step 110) to give higher priority to the first wireless interface device. Control information adjustments can be made in response to other system events (such as the detection of BT commands, packet maintenance requirements, etc.) to provide real-time throughput by adjusting device prioritization. Depending upon designer preferences, the adjustments can be made periodically, in response to user input, at predetermined events or conditions, on a packet-by-packet basis, or on any other basis that permits changes in the performance requirements of a particular wireless transmission to be detected and accommodated

As will be appreciated, the monitoring and adjustment steps 108, 110 may be implemented as a series of discrete processing operations or consolidated into a single program operation. In addition, a variety of adjustment protocols may be followed to change the control information. For example, when a predetermined condition is detected at step 108, the control information may be adjusted at step 110 to provide maximum priority for the wireless interface device that triggered the adjustment. Alternatively, an incrementation technique may be used to incrementally raise the priority for the wireless interface device that triggered the adjustment, one or more levels at a time. As yet another alternative, a target or threshold level of performance for the wireless interface device may be established whereby the control information is adjusted at step 110 to track to the target or threshold level in response to detected device performance. Other adjustment algorithms may be selected, based on user or designer preferences, to improve the overall wireless transmission performance in the face of dynamic application and transmission requirements.

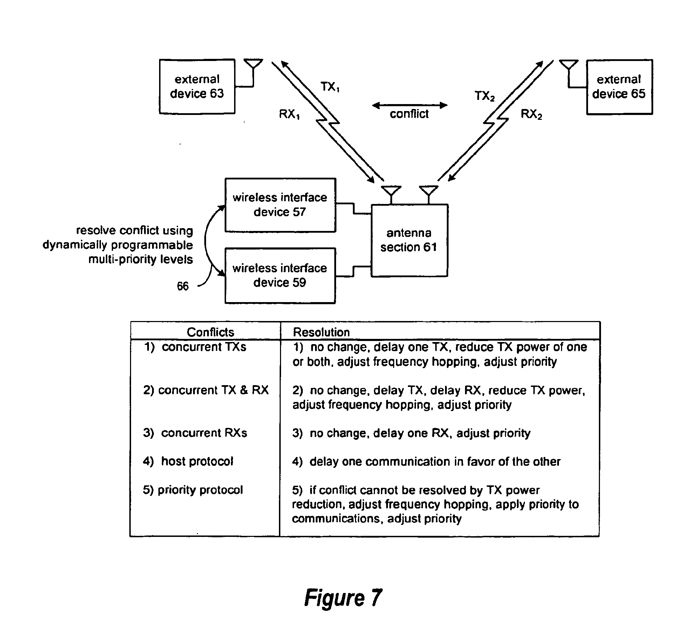

Figure 7 is a diagram illustrating wireless interface devices (e.g., 57 and 59 in Figure 2) associated with a host device (e.g., 50 in Figure 2) that coordinates communications with two external wireless devices (e.g., 63 and 65 in Figure 2). The wireless interface devices 57 and 59 and the external wireless devices 63 and 65 may communication using any type of standardized wireless communication including, but not limited to, IEEE 822.11 (a), (b), or (g), Bluetooth, GSM, CDMA, TDMA, LMPS, or MMPS. The external devices 63 and 65 may use the same or different wireless communication standard. When the external devices 63 and 65 use standards that occupy the same or similar frequency spectrums, a conflict between concurrent communications may occur. In other words, when the both external devices are communicating with the wireless interface devices 57 and 59 their respective communications may interfere with the other's communication, reducing the quality of service for one or both communications.

To resolve the conflict the wireless interface devices 57 and 59 coordinate the communications with their respective external devices 63 and 65 using dynamically programmable multi-priority levels 66. As shown in the accompanying table of Figure 7, when a conflict arises, the wireless interface devices 57 and 59 have a multitude of resolutions. For example, when both wireless interface devices 57 and 59 desire to concurrently transmit packets to their respective external devices 63 and 65 (i.e., any overlapping transmission), the wireless interface devices 57 and 59 determine whether a concurrent transmission would cause sufficient interference that would degrade one or both of the transmissions. If not, no change is required and the wireless interface devices 57, 59 may concurrently transmit.

If, however, sufficient interference would exist, the wireless interface devices process the multi-priority level information 66 for each device to resolve the conflict by delaying one of the transmissions with respect to the other to avoid concurrent transmissions, reducing the transmit power for one or both of the concurrent transmissions, adjusting the frequency hopping of a Bluetooth compliant wireless interface device 57 or 59 and/or adjusting the prioritization allocation for the devices if required.

The wireless interface devices 57 and 59 may delay the transmissions based on a priority protocol, a host protocol, a default mechanism, an ad hoc mechanism, or a user defined ordering which takes into account the respective priorities assigned to the devices, where each device priority may be selected from multiple (at least three) dynamically programmable priority levels. In essence, the delaying of the concurrent transmissions removes the concurrency such that only one transmission is occurring at any given time. The delaying may be established by an equal or imbalanced staggering of the transmissions or by allowing one of the communications to complete before the other is serviced. For example, the host protocol may prohibit concurrent communications. As such, the communication with one of external devices that was initiated first will be completed before communication with the other external devices is serviced. As a further example of the delaying of concurrent transmissions, the priority protocol may dictate that user interface wireless devices (e.g., wireless keyboard, mouse, etc.) have priority over data transfer peripheral wireless devices (e.g., PDA, down loading data to a cell phone, a printer, etc.). The priority protocol may also prioritize real time communications (e.g., voice, audio, and/or video data) over data transfer communications. In addition, the priority protocol may indicate whether the concurrent transmissions are to be staggered or sequential. The user defined priority list may be based on the type of external devices. For example, the user may prioritize communications with his or her PDA over any other type of communications, followed by communications with the cell phone, etc. In this manner, the conflict resolution may be customized to the user's preferences.

As described herein, the priority as between two transmitting devices may be dynamically adjusted when one of the devices is transmitting data from an application that requires real time data, such as an audio or video application. In addition to boosting the priority for wireless devices handling real time applications and the like, the priority level may also be downgraded once it is detected that the real time data application is no longer running or required. For example, the wireless devices may be returned to a target or default priority scheme once a high throughput application is finished.

As also indicated in the table in Figure 7, when the conflict corresponds to one wireless interface device potentially transmitting data while the other wireless interface device is potentially receiving data, the wireless interface devices determine whether concurrent transmission and reception would cause significant interference. If not, the current transmission and reception is performed. If, however, significant interference would be produced, the wireless interface device may resolve the conflict by using the host protocol and/or priority protocol to delay the transmission to avoid the concurrency, delay the reception to avoid the concurrency, reduce the transmit power or adjust the frequency hopping of a Bluetooth device. In addition, the device priorities may be adjusted in response to detected conditions, such as active applications or detected throughput requirements for the wireless device, to give reception priority to one device over the transmission priority of another device, or vice versa.

When the conflict corresponds to concurrent receptions, the wireless interface devices determine whether such concurrency would cause significant interference. If not, the concurrent receptions are processed. If, however, significant interference would exist, one of the receptions may be delayed to avoid the concurrency or one of the external devices may be instructed to reduce its transmitting power. In addition, the device priorities may be adjusted in response to detected conditions, such as active applications or detected throughput requirements for the wireless device, to give reception priority to one device over another.

In accordance with the present invention, the control information (e.g., multi-priority control 29 in Figure 2) may be passed between MAC modules of the wireless interface devices 57 and 59 using a four-wire interface or control, though a two-wire interface provides an improved pin count feature. In a selected embodiment, the present invention provides an adjustment mechanism for monitoring transmission requirements for a given wireless communication device and changing the priority allocations to give the wireless communication device adequate priority (and resulting throughput performance) to satisfy the transmission requirements for that device.

As described herein and claimed below, a method and apparatus are provided for providing a dynamically updated and adjusted coexistence protocol for wireless interface devices using multiple priority levels to selectively adjust device throughput in response to changing transmission conditions or requirements. The new technique may be used to adjust device transmission performance in response to user-specified requirements and/or in response to detection of predetermined applications or commands being executing on the wireless device(s). In one implementation, a laptop computer communicates wirelessly with at least a Bluetooth peripheral device and a WLAN network device by controlling the MAC modules for the peripheral and network to adjust prioritization of the two devices using pairings of priority levels which may be selected from a plurality of available priority levels. For example, the WLAN might ordinarily be granted priority as between the two devices, but when a HID application runs on the Bluetooth device, the relative prioritization is adjusted using control information transmitted between the MAC layers to increase the priority of the Bluetooth device or to give the Bluetooth device priority over the WLAN device.

As will be appreciated, the present invention may be implemented in a computer accessible medium including one or more data structures representative of the circuitry included in the system described herein. Generally speaking, a computer accessible medium may include storage media such as magnetic or optical media, e.g., disk, CD-ROM, or DVD-ROM, volatile or non-volatile memory media such as RAM (e.g., SDRAM, RDRAM, SRAM, etc.), ROM, PROM, EPROM, EEPROM, etc., as well as media accessible via transmission media or signals such as electrical, electromagnetic, or digital signals, conveyed via a communication medium such as a network and/or a wireless link. For example, data structure(s) of the circuitry on the computer accessible medium may be read by a program and used, directly or indirectly, to implement the hardware comprising the circuitry described herein. For example, the data structure(s) may include one or more behavioral-level descriptions or register-transfer level (RTL) descriptions of the hardware functionality in a high level design language (HDL) such as Verilog or VHDL. The description(s) may be read by a synthesis tool which may synthesize the description to produce one or more netlist(s) comprising lists of gates from a synthesis library. The netlist(s) comprise a set of gates which also represent the functionality of the hardware comprising the circuitry. The netlist(s) may then be placed and routed to produce one or more data set(s) describing geometric shapes to be applied to masks. The masks may then be used in various semiconductor fabrication steps to produce a semiconductor circuit or circuits corresponding to the circuitry. Alternatively, the data structure(s) on computer accessible medium may be the netlist(s) (with or without the synthesis library) or the data set(s), as desired. In yet another alternative, the data structures may comprise the output of a schematic program, or netlist(s) or data set(s) derived therefrom. While a computer accessible medium may include a representation of the present invention, other embodiments may include a representation of any portion of the wireless communication device, transceiver circuitry and or processing modules contained therein.

While the system and method of the present invention has been described in connection with the preferred embodiment, it is not intended to limit the invention to the particular form set forth, but on the contrary, is intended to cover such modifications as may be included within the scope of the invention as defined by the appended claims.

## Claims

1. A method for coordinating potentially conflicting wireless communications in an integrated circuit wireless communication device having at least two wireless transceiver circuits, **characterized by** the steps:
assigning a first priority level to a first transceiver circuit and a second priority level to a second transceiver circuit by exchanging control signals, wherein each priority level is selected from a plurality of available priority levels, and wherein
an Initially selected control signal is used to allocate receiving and/or
transmission priorities as between the first and the second transceiver circuits,
the initially selected control signal being adjusted to another control signal when higher throughput is required for the first or second transceiver circuit,
transmitting priority levels between the first and second transceiver circuits,
receiving or transmitting data on the first and second wireless transceiver circuits in accordance with a relative priority of the first priority level to the second priority level,
detecting a predetermined application adapted to receive or transmit data on the second wireless transceiver circuit,
incrementally increasing the second priority level to a third priority level, when a predetermined application is detected as transmitting or receiving on the second wireless transceiver circuit via a control signal adjustment, and
receiving or transmitting data on the second wireless transceiver circuit in accordance with the relative priority of the third priority level to the first priority level.

2. A method according to claim 1 where the predetermined application is a human interface device HID or an audio-video application.

3. An Integrated circuit wireless communication device adapted to coordinate potentially conflicting wireless communications, **characterized by**:
a first wireless transceiver circuit (57, 59, 60) including a first MAC layer module,
a second wireless transceiver circuit (57, 59, 60) including a second MAC layer module, wherein a first priority level Is assigned to the first transceiver circuit and
a second priority level is assigned to the second wireless transceiver circuit by exchanging control signals, and wherein each priority level is selected from a plurality of available priority levels, and wherein the first and second wireless transceiver circuits are adapted to receive or transmit data In accordance with a relative priority of the first priority level to the second priority level,
an interface (29) adapted to couple the first and second transceiver circuits, said interface being adapted to transmit priority levels between the first and second transceiver circuits, and
a controller comprising the first MAC layer module and the second MAC layer module, the controller adapted to coordinate operations of the first and second transceiver circuits, wherein an initially selected control signal is used to allocate receiving and/or transmission priorities as between the first and the second transceiver circuits, the initially selected control signal being adjusted to another control signal when higher throughput Is required for the first or second transceiver circuit,
said controller further adapted to incrementally increase the second priority level to a third priority level In response to detecting a predetermined application receiving or transmitting data on the second wireless transceiver circuit via a control signal adjustment, and wherein the second wireless transceiver circuit Is further adapted to receive or transmit data in accordance with the relative priority of the third priority level to the first priority level.

## Patentansprüche

1. Verfahren zum Koordinieren potentiell miteinander in Konflikt stehender Drahtloskommunikationen in einem drahtlosen IC-Kommunikationsgerät, das wenigstens zwei drahtlose Transceiverschaltungen hat, **gekennzeichnet durch** die Schritte:
Zuteilen einer ersten Prioritätsstufe zu einer ersten Transceiverschaltung und einer zweiten Prioritätsstufe zu einer zweiten Transceiverschaltung **durch** Austauschen von Steuersignalen, wobei jede Prioritätsstufe aus einer Vielzahl verfügbarer Prioritätsstufen ausgewählt wird, und wobei ein anfänglich ausgewähltes Steuersignal verwendet wird, um Empfangs- und/oder Sendeprioritäten zwischen der ersten und der zweiten Transceiverschaltung zuzuteilen, wobei das anfänglich ausgewählte Steuersignal an ein anderes Steuersignal angepasst wird, wenn ein größerer Durchsatz für die erste oder die zweite Transceiverschaltung erforderlich ist,
Übertragen von Prioritätsstufen zwischen der ersten und der zweiten Transceiverschaltung,
Empfangen oder Senden von Daten auf der ersten und der zweiten drahtlosen Transceiverschaltung gemäß einer relativen Priorität der ersten Prioritätsstufe zur zweiten Prioritätsstufe,
Ermitteln einer vorgegebenen Anwendung, die dazu ausgelegt ist, Daten auf der zweiten drahtlosen Transceiverschaltung zu empfangen oder zu senden,
inkrementelles Erhöhen der zweiten Prioritätsstufe auf eine dritte Prioritätsstufe, wenn ermittelt wird, dass eine vorgegebene Anwendung auf der zweiten drahtlosen Transceiverschaltung sendet oder empfängt, über eine Steuersignaleinstellung, und
Empfangen oder Senden von Daten auf der zweiten drahtlosen Transceiverschaltung gemäß der relativen Priorität der dritten Prioritätsstufe zur ersten Prioritätsstufe.

2. Verfahren nach Anspruch 1, wobei die vorgegebene Anwendung eine Human Interface Device, HID-, oder eine Audio-Video-Anwendung ist.

3. Drahtloses IC-Kommunikationsgerät, das dazu ausgelegt ist, potentiell miteinander in Konflikt stehende Drahtloskommunikationen zu koordinieren, **gekennzeichnet durch**:
eine erste drahtlose Transceiverschaltung (57, 59, 60) mit einem ersten MAC-Schichtmodul,
eine zweite drahtlose Transceiverschaltung (57, 59, 60) mit einem zweiten MAC-Schichtmodul, wobei eine erste Prioritätsstufe der ersten Transceiverschaltung und eine zweite Prioritätsstufe der zweiten Transceiverschaltung **durch** Austauschen von Steuersignalen zugeteilt wird, und wobei jede Prioritätsstufe aus einer Vielzahl verfügbarer Prioritätsstufen ausgewählt wird, und wobei die erste und die zweite drahtlose Transceiverschaltung dazu ausgelegt sind, Daten gemäß einer relativen Priorität der ersten Prioritätsstufe zur zweiten Prioritätsstufe zu senden oder zu empfangen,
eine Schnittstelle (29), die dazu ausgelegt ist, die erste und die zweite Transceiverschaltung zu koppeln, wobei die Schnittstelle dazu ausgelegt ist, Prioritätsstufen zwischen der ersten und der zweiten Transceiverschaltung zu übertragen, und
einen Controller, der das erste MAC-Schichtmodul und das zweite MAC-Schichtmodul aufweist, wobei der Controller dazu ausgelegt ist, Operationen der ersten und der zweiten Transceiverschaltung zu koordinieren, wobei ein anfänglich ausgewähltes Steuersignal verwendet wird, um Empfangs- und/oder Sendeprioritäten zwischen der ersten und der zweiten Transceiverschaltung zuzuteilen, wobei das anfänglich ausgewählte Steuersignal an ein anderes Steuersignal angepasst wird, wenn ein größerer Durchsatz für die erste oder die zweite Transceiverschaltung erforderlich ist,
wobei der Controller des Weiteren dazu ausgelegt ist, die zweite Prioritätsstufe inkrementell auf eine dritte Prioritätsstufe zu erhöhen, im Ansprechen auf das Ermitteln, dass eine vorgegebene Anwendung auf der zweiten drahtlosen Transceiverschaltung Daten sendet oder empfängt, über eine Steuersignaleinstellung, und wobei die zweite drahtlose Transceiverschaltung des Weiteren dazu ausgelegt ist, Daten gemäß der relativen Priorität der dritten Prioritätsstufe zur ersten Prioritätsstufe zu empfangen oder zu senden.

## Revendications

1. Procédé de coordination de communications sans fil potentiellement en conflit dans un dispositif de communication sans fil à circuits intégrés ayant au moins deux circuits d'émetteur-récepteur sans fil, **caractérisé par** les étapes :
d'attribution d'un premier niveau de priorité à un premier circuit d'émetteur-récepteur et d'un deuxième niveau de priorité à un deuxième circuit d'émetteur-récepteur par échange de signaux de contrôle, dans lequel chaque niveau de priorité est sélectionné parmi une pluralité de niveaux de priorité disponibles, et dans lequel un signal de contrôle initialement sélectionné est utilisé pour attribuer des priorités de réception et/ou d'émission entre les premier et deuxième circuits d'émetteur-récepteur, le signal de contrôle initialement sélectionné étant ajusté sur un autre signal de contrôle lorsqu'un débit supérieur est requis pour le premier ou le deuxième circuit d'émetteur-récepteur,
de transmission de niveaux de priorité entre les premier et deuxième circuits d'émetteur-récepteur,
de réception ou d'émission de données sur les premier et deuxième circuits d'émetteur-récepteur sans fil en fonction d'une priorité relative du premier niveau de priorité sur le deuxième niveau de priorité,
de détection d'une application prédéterminée adaptée à recevoir ou émettre des données sur le deuxième circuit d'émetteur-récepteur sans fil,
d'augmentation incrémentielle du deuxième niveau de priorité jusqu'à un troisième niveau de priorité, lorsqu'une application prédéterminée est détectée comme émettant ou recevant sur le deuxième circuit d'émetteur-récepteur sans fil par l'intermédiaire d'un ajustement de signal de contrôle, et
de réception ou d'émission de données sur le deuxième circuit d'émetteur-récepteur sans fil en fonction de la priorité relative du troisième niveau de priorité sur le premier niveau de priorité.

2. Procédé selon la revendication 1 où l'application prédéterminée est un dispositif d'interface humaine HID ou une application audio-vidéo.

3. Dispositif de communication sans fil à circuits intégrés adapté à coordonner des communications sans fil potentiellement en conflit, **caractérisé par** :
un premier circuit d'émetteur-récepteur sans fil (57, 59, 60) incluant un premier module de couche MAC, un deuxième circuit d'émetteur-récepteur sans fil (57, 59, 60) incluant un deuxième module de couche MAC, dans lequel un premier niveau de priorité est attribué au premier circuit d'émetteur-récepteur et un deuxième niveau de priorité est attribué au deuxième circuit d'émetteur-récepteur par échange de signaux de contrôle, et dans lequel chaque niveau de priorité est sélectionné parmi une pluralité de niveaux de priorité disponibles, et dans lequel les premier et deuxième circuits d'émetteur-récepteur sans fil sont adaptés à recevoir ou émettre des données en fonction d'une priorité relative du premier niveau de priorité sur le deuxième niveau de priorité,
une interface (29) adaptée à coupler les premier et deuxième circuits d'émetteur-récepteur, ladite interface étant adaptée à transmettre des niveaux de priorité entre les premier et deuxième circuits d'émetteur-récepteur, et
un contrôleur comprenant le premier module de couche MAC et le deuxième module de couche MAC, le contrôleur adapté à coordonner des opérations des premier et deuxième circuits d'émetteur-récepteur, dans lequel un signal de contrôle initialement sélectionné est utilisé pour attribuer des priorités de réception et/ou d'émission entre les premier et deuxième circuits d'émetteur-récepteur, le signal de contrôle initialement sélectionné étant ajusté sur un autre signal de contrôle lorsqu'un débit supérieur est requis pour le premier ou le deuxième circuit d'émetteur-récepteur,
ledit contrôleur adapté en outre à augmenter de façon incrémentielle le deuxième niveau de priorité jusqu'à un troisième niveau de priorité en réponse à la détection d'une application prédéterminée émettant ou recevant des données sur le deuxième circuit d'émetteur-récepteur sans fil par l'intermédiaire d'un ajustement de signal de contrôle, et dans lequel le deuxième circuit d'émetteur-récepteur sans fil est en outre adapté à recevoir ou émettre des données en fonction de la priorité relative du troisième niveau de priorité sur le premier niveau de priorité.
